Europäisches Patentamt

(19) European Patent Office

Office européen des brevets

(11) **EP 0 707 023 A1**

(12) **EUROPEAN PATENT APPLICATION**

(43) Date of publication:
17.04.1996 Bulletin 1996/16

(51) Int. Cl.$^6$: **C08G 61/12**

(21) Application number: 95202736.5

(22) Date of filing: 11.10.1995

(84) Designated Contracting States:
AT BE DE FR GB IT NL

(30) Priority: 14.10.1994 BE 9400925

(71) Applicant: DSM N.V.
NL-6411 TE Heerlen (NL)

(72) Inventors:
• van Asselt, Robert
NL-5615 NH Eindhoven (NL)
• Aagaard, Olav Marcus
NL-6162 JM Geleen (NL)
• Froehling, Peter Ernst
NL-6136 BH Sittard (NL)
• Vanderzande, Dirk Jean Marie
B-3850 Nieuwerkerken (BE)

(54) **Method for the preparation of a heterocyclic polymer**

(57)    The invention relates to a method for the preparation of a heterocyclic polymer from monomer units having a structure according to the formula of Fig. 1a or 1b, where $R_1$ and $R_2$ are the same or different and are selected from the group formed by hydrogen, alkyl groups with 1-20 carbon atoms, aryl groups with 6-20 carbon atoms, alkaryl groups with 7-40 carbon atoms, aralkyl groups with 7-40 carbon atoms, alkoxy groups with 1-18 carbon atoms, $-O(CH_2CH_2O)_nCH_3$ with n = 4 and halogens; or where $R_1$ and $R_2$ both form part of a closed ring structure or from monomer units having a structure according to the formula of Fig. 3a or 3b, where $R_1$ to $R_6$ inclusive are the same or different and are selected from the group defined for $R_1$ and $R_2$; and with X = S and Y = S.

fig. 1a

## Description

The invention relates to a method for the preparation of a heterocyclic polymer from monomer units having a structure according to the formula in Fig. Ia or Ib, where $R_1$ and $R_2$ are the same or different and are selected from the group formed by hydrogen, alkyl groups with 1-20 carbon atoms, aryl groups with 6-20 carbon atoms, alkaryl groups with 7-40 carbon atoms, aralkyl groups with 7-40 carbon atoms, alkoxy groups with 1-18 carbon atoms, $-O(CH_2CH_2O)_nCH_3$ with n = 4 and halogens; or where $R_1$ and $R_2$ both form part of a closed ring structure.

Such a method is known from EP-A-633903. In the method described there, the polymerization takes place in the presence of a sulphur-containing reactant. It is stated that X may be O or S and that Y can be chosen from O, S or N-$R_3$, where $R_3$ = hydrogen, an alkyl group, an aryl group, an alkaryl group or an aralkyl group.

A disadvantage of this known method is that the polymerization takes place in the presence of a sulhpur-containing reactant through which after the polymerization residual products of the added reactant and any non-reacted reactant must be removed from the reaction mixture.

It is the object of the invention to provide a method for the preparation of heterocyclic polymers in the absence of said sulphur-containing reactant.

According to the invention this object is achieved in that in the monomers both X = S and Y = S.

Surprisingly, it has been found possible when using the combination of substituents thus chosen to prepare a conducting polymer without addition of extra reactants. In contrast, it is impossible to achieve the same with any other combination of substituents for X and Y covered by the teachings of EP-A-633903. In all other cases the presence of a sulphur-containing reactant proves to be indispensable for obtaining a conducting polymer.

An advantage of the process according to the invention is that after the polymerization no residual products of the sulhpur containing reactant or unreacted reactants must be removed from the reaction mixture.

A further advantage of the method according to the invention is that the polymers obtained are undoped. Under a doped polymer here and hereafter is understood a polymer of which the electrical conductivity is caused by dopants.
The known method as a rule yields doped polymers, which must be de-doped if one wants the polymers to be available in undoped form. Often, it is also desirable to obtain polymers that are doped with a dopant that cannot be used in the known method. In that case the polymer obtained with the known method must first be de-doped before the desired dopant can be applied. In both cases the method according to the invention renders the de-doping step superfluous. This way, a separation is achieved between polymerization and doping step, which could not yet be realized according to the known methods.

A further advantage of the method according to the invention is that it can be carried out in bulk, in solution and in suspension as well as in compositions into which the suitable monomers have been incorporated and that the polymer obtained does not require the removal of residual reaction products of the reactant nor unreacted reactant. The monomers can, for example, be incorporated into thermoplastic polymers or thermosetting resins, the mixture can be shaped and polymerization can be effected in the shaped article. Likewise it is possible to first polymerize the monomers into a conducting polymer in the mixture and then shape the mixture. In both cases a conductive article is obtained, from which no by-products or superfluous reactants need be removed. If the polymerization takes place in solution or in suspension, the method according to the invention yields a dispersion of undoped conducting polymer, which can advantageously be used directly, or optionally after suitable doping of the conducting polymer, for application of a conductive coating. The dispersion of the conducting polymer can optionally be combined with suitable film-forming binders, present in the form of a dispersion or in solution. The application of a suitable dopant makes it possible to obtain a virtually colourless dispersion, and thus also to apply a colourless conductive, transparent coating. Suitable dopants are oxidizing compounds, such as quinones, halogens and salts which contain an oxidizing cation or anion or both. Examples of suitable quinones are 2,3-dichloro-5,6-dicyano-1,4-benzoquinone, tetrachloro-1,2-benzoquinone and tetrachloro-1,4-benzoquinone. Examples of suitable halogens are bromine and iodine. Examples of suitable salts are ferric chloride, molybdenum (IV) chloride and ruthenium (V) chloride, nitrosonium tetrafluoroborate, nitrosonium hexafluoroantimonate, ferric tosylate and ammonium peroxodisulphate. The stability and/or solubility of the polymers prepared can be raised by using oxidizing salts of acids such as, for example, dodecyl benzene sulphonic acid, naphthalene disulphonic acid and bis(2-ethylhexyl) phosphoric acid.

The polymers prepared using the method of the invention can also suitably be processed by themselves, both in solution and in the melt, optionally after isolation from the dispersion. It is also possible for the polymer thus isolated to be incorporated into a thermoplastic polymer or a thermosetting resin, after which a conductive article can be formed from the resulting mixture. This shaping process can be effected using the techniques known for this. In addition, the reaction time of the reaction that takes place is short, while the reaction efficiency is good. The monomer units used in the method according to the invention can simply be synthesized and be stored at room temperature.

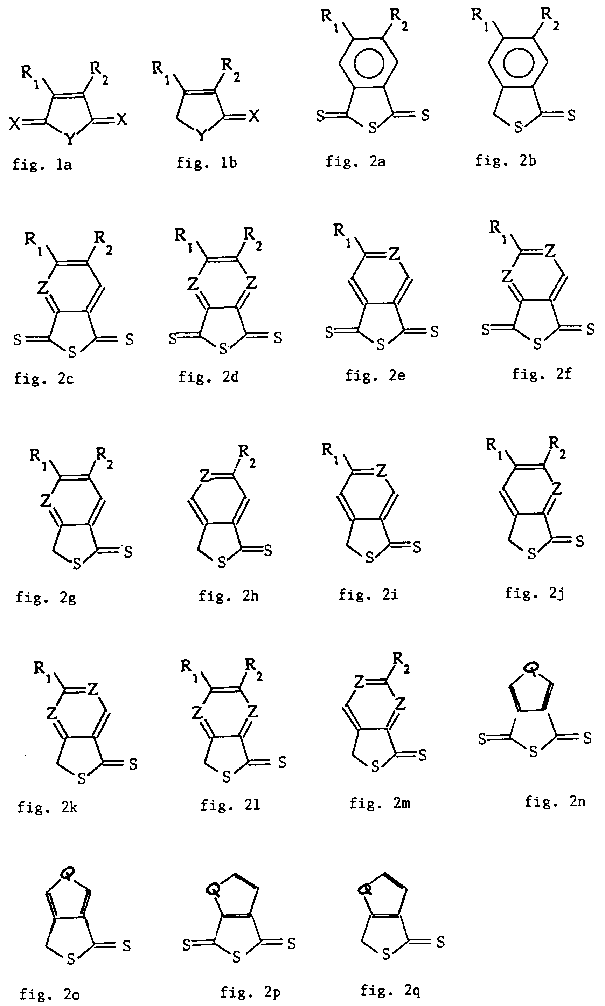

In the description of the monomer units that are suitable for use in the method according to the invention, reference is made to the figures that belong to this description. In these, Figures 1a-1b, 2a-2q and 3a-3b all are general formulas of such monomer units.

The monomer units that can be used in the method according to the invention have a structure according to the formula represented in Fig. 1a or Fig. 1b, where $R_1$ and $R_2$ are the same or different and are selected from the group formed by hydrogen, alkyl groups with 1-20 carbon atoms, aryl groups with 6-20 carbon atoms, alkaryl groups with 7-40 carbon atoms, aralkyl groups with 7-40 carbon atoms, alkoxy groups with 1-18 carbon atoms, $-O(CH_2CH_2O)_nCH_3$ with n = 4 and halogens; or where $R_1$ and $R_2$ both form part of a closed ring structure and where X = S and Y = S. Optionally, the ring structure is substituted with the substituents specified for $R_1$ and $R_2$ also at other places. Some specific examples of suitable monomer units are maleic trithioanhydride, citraconic trithioanhydride, succinic trithioanhydride, dithio-$\gamma$-butyrolactone and glutaric trithioanhydride.

If desired the monomer unit has a closed ring structure, for example as shown in Fig. 2a and Fig. 2b. Some highly suitable specific examples of such monomer units are dithiophthalide and trithiophthalic anhydride. Dithiophthalide can be obtained through conversion of 2-thiophthalide with diphosphorus pentasulphide. 2-Thiophthalide can simply be prepared by oxidation of o-xylene with sulphur and water, or by reduction of phthalic anhydride with hydrogen sulphide. These preparation methods are described by W. Toland in Journal of Organic Chemistry 26 (1961), p. 299, and in Journal of Organic Chemistry 28 (1963), p. 3124. The resulting 2-thiophthalide can be converted into dithiophthalide with diphosphorus pentasulphide.

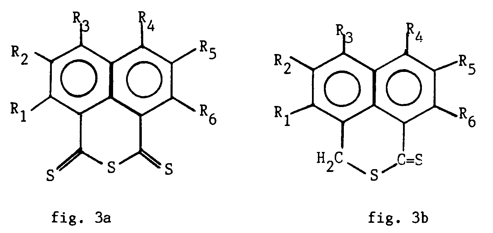

The above-mentioned ring structure optionally contains atoms other than carbon atoms. Examples of such monomer units are given in Figs. 2c-2m, where Z = N or P, or in Figs. 2n-2q, where Q = O, S or N-$R_3$; $R_3$ is hydrogen, an alkyl group, an aryl group, an alkaryl group or an aralkyl group. It is also possible for Z to be replaced wholly or in part by O and/or S atoms, in which case the adjoining unsaturated bonds have of course disappeared. In the formulas of Figs. 2c-2q $R_1$ and $R_2$ are defined as above. Optionally the ring structure is substituted with the substituents defined for $R_1$ and $R_2$ also at other places. Some specific examples of suitable monomer units are 5-azophthalic trithioanhydride, 3,4-pyridine-dicarboxylic trithioanhydride, 2,3-pyrazine dicarboxylic trithioanhydride, 4-azophthalic trithioanhydride, 4-azodithiophthalide, 5-azodithiophthalide, 6-azodithiophthalide, 7-azodithiophthalide, 4,7-diazodithiophthalide, 4,6-diazodithiophthalide, 5,7-diazodithiophthalide, 2,3-thiophene dicarboxylic trithioanhydride, 3,4-thiophene dicarboxylic trithioanhydride, 4-methoxy-5-dodecyloxy dithiophthalide and 4,5-pyrimidine dicarboxylic trithioanhydride. Other suitable monomer units with a closed ring structure are represented in the formulas of Figs. 3a and 3b. $R_1$ to $R_6$ inclusive may be the same or different, all being chosen from the group as specified in the above for $R_1$ and $R_2$.
Specific examples of such structures which are preferably applied are naphthalene-1,8-dicarboxylic trithioanhydride and the cyclic dithioester of naphthalene,1-methylene thiol,8-dithiocarboxylic acid. In the ring structure according to the formulas of Figs. 3a and 3b optionally one or more carbon atoms at positions 2-7 can be substituted with, for example, nitrogen or phosphorus atoms. Said positions are numbered in line with the IUPAC notation as described in the CRC Handbook of Chemistry and Physics, 70th edition, 1989-1990, page C-30. The monomer units are preferably chosen from the group formed by maleic trithioanhydride, phthalic trithioanhydride and dithiophthalide.

Optionally a mixture a different monomer units is applied.

The preparation of the heterocyclic polymer usually takes place in the liquid phase. To this end the monomer units can for example be heated to a temperature above their melting points. It is also possible to dissolve the monomer units in a suitable solvent. The solvent is chosen, for example, from the group formed by aromatic solvents such as benzene, toluene, xylene and mesitylene, hydrocarbons such as pentane and hexane, ethers such as dioxane, diethyl ether, ethyl methyl ether, di(methoxy ethyl) ether and tetrohydrofuran, ketones such as acetone, diethyl ketone, methyl ethyl ketone and methyl isobutyl ketone, alcohols such as methanol, ethanol, isopropanol and phenol, halogenated compounds such as $CHCl_3$, $CH_2Cl_2$ and hydrocarbon tetrachloride, esters such as ethyl formiate and ethyl acetate, and compounds such as $CS_2$, acetonitrile, nitromethane, dimethyl sulphoxide, dimethyl formamide, triethyl phosphate, dimethyl acetamide, pyridine, formamide and methyl formamide. A mixture of several solvents can also be applied. The reaction temperature usually lies between 20 and 200°C, preferably between 100 and 200°C. The reaction time of the polymerization reaction usually lies between 0.5 and 48 hours, preferably between 1 and 24 hours, and more preferably between 1 and 5 hours. The pressure during the polymerization reaction usually lies between 0.01 and 100 bar, preferably between 0.01 and 10 bar, and more preferably between 0.02 and 5 bar.

The method according to the invention yields heterocyclic polymers, the degree of polymerization of which may vary over a wide range. The degree of polymerization usually lies between 5 and 5000.

Through a correct choice of the substituents $R_1$ and $R_2$, as can simply be made by one skilled in the art, the heterocyclic polymer becomes soluble in the usual solvents. This makes it possible to process the resulting heterocyclic polymer in solution.

It is also quite possible to mix the heterocyclic polymer obtained with one or more other polymers so as to obtain a conductive blend. This, too, can be effected in a solvent. Examples of suitable thermoplastic polymers are polyvinyl chloride or copolymers of vinyl chloride and other vinyl monomers, polyvinylidene fluoride or copolymers of polyvinylidene fluoride and other vinyl monomers, polystyrene or copolymers of vinyl aromatic monomers, for example styrene and p-methyl styrene, and other monomers, for example maleic anhydride, acrylonitrile and maleimide, poly(meth)acrylates or copolymers of a (meth)acrylate with other monomers, polyvinyl carbazole, polyolefins, for example polyethylene, ultrahigh-molecular weight polyethylene (UHMWPE), polyisobutylene, polybutylene, polymethyl pentene and polypropylene, polyvinyl acetate, polyvinyl alcohol, polyacrylonitrile, poly(meth)acryl esters, polyamides, polyesters, for example polyethylene terephthalate and polybutylene terephthalate, polycarbonates, polyether imides, polyvinyl (m)ethyl ethers, polyvinyl isobutyl ethers, polyimides, polyethers, polysulphones, polyarylates, polyether sulphones, polyether esters, polyphenylene oxides, polyphenylene sulphides, polyester imides, polyether imides, polyurethanes, polyamide imides, poly(m)ethylene oxides, polybutadiene rubbers, polytetrafluoro ethylene, acrylonitrile-butadiene-styrene copolymers, polyether-polyester block copolymers, liquid crystalline polymers, and the like. It is also possible, as already described, to incorporate the said suitable monomers into the above-mentioned polymers. After polymerization of the monomers to yield the heterocyclic polymer then again a conductive blend is obtained.

The heterocyclic polymers prepared according to the method of the invention or the said suitable monomers can also be incorporated into thermosetting resins. After curing of the resin and if necessary polymerization of the monomers to yield the heterocyclic polymer a conductive thermosetting blend is obtained.

Examples of suitable thermosetting resins are epoxy resins, acrylate resins, melamine resins, BMI resins, urethane resins, unsaturated polyester resins, aminoplastics and phenoplastics. The thermosetting resin may consist of a monomer or oligomer of a thermosetting polymer or a precursor of a thermosetting polymer or a thermosetting prepolymer, which has already undergone a certain degree of polymerization, or a mixture of said materials. The resin may further contain the customary additives such as fillers, inhibitors, accelerators or combinations or mixtures of such substances.

The heterocyclic polymer obtained using the method according to the invention is generally electrically conducting.

The conducting properties of the electrically conducting polymer obtained can be raised to the desired level by means of an (oxidative or reductive) doping step, for which use can be made of the known doping techniques and dopants. These are given, for example, in 'Handbook of conducting polymers' (T.A. Skotheim, Marcel Dekker Inc., New York, USA (1986)).

By conducting properties of the desired level is usually meant that the conductivity, measured using to the so-called four-probe technique, is at least $10^{-5}$ S/cm. This method is briefly described in EP-A-314311. A more detailed description is to be found in H.H. Wieder, Laboratory Notes on Electrical and Galvanomagnetic Measurements, Elsevier, New York, 1979. The specific conductivity is measured by this method:

$$\sigma = (L/A) * (1/R),$$

where

| | |
|---|---|
| $\sigma =$ | specific conductivity [S/cm] |
| $L =$ | distance between the two inner electrodes [cm] |
| $R =$ | resistance [ohm] |
| $A =$ | cross-sectional area [cm$^2$]. |

In specific cases the heterocyclic polymer obtained by the method according to the invention is more or less transparent to visible light (light permeable). The transparency, an effect also described by Wudl in Mol. Cryst. Liq. Cryst. 118 (1985), pp. 199-204, is measured using a spectroscopic technique according to the standard ASTM E-409-81.

Optionally additives are added to the heterocyclic polymer obtained or to a blend containing this polymer. Examples are impact modifiers, stabilizers, antioxidants, lubricants, fillers, dyes, pigments, flame retardants, reinforcing fibres and conductive fibres.

The polymers or polymer blends obtained according to the invention can be applied in conducting coatings for the housings of sensitive electronic equipment, flexible electrical connections, photocells, anti-static packaging materials and floor coverings and thin, optically transparent finishing layers of, for example, cathode-ray tubes and instrument panels.

The invention will be elucidated on the basis of the following examples, without being limited thereto.

Example I

0.51 g of dithiophthalide was kept at 160°C in a nitrogen atmosphere for 20 hours. A bluish black product was formed. The Raman spectrum of the product obtained did not show the lines at 466 and 1192 cm$^{-1}$ which are characteristic for doped polyisothianaphthene. After cooling and washing with tetrahydrofuran and chloroform to remove the unreacted monomer, polyisothianaphthene (PITN) in powder form was obtained. The conversion of the dithiophthalide (determined by weighing) was 85%. The composition of the product was $C_8H_{4.1}S_{1.2}$. The electrical conductivity of this product, measured on a moulded bar of 1x2x20 mm$^3$, was $10^{-4}$ S.cm$^{-1}$. This proves that the product obtained by the process according to the invention is undoped. The product was doped oxidatively through reaction of 0.25 g of PITN for 1 hour at 20°C in 10 ml of a 0.1 molar solution of NOBF$_4$ in acetonitrile. After washing with acetonitrile and drying the conductivity had increased to 0.1 S.cm$^{-1}$.

Example II

A solution of 0.16 g of dithiophthalide in 4 ml of mesitylene was kept at its boiling point for 40 hours. After cooling and washing with tetrahydrofuran, polyisothianaphthene was obtained in a yield of more than 50%, its conductivity being comparable to that of the product of Example I.

## Example III

A solution of 0.55 g of polycarbonate and 0.17 g of dithiophthalide in 50 ml of chloroform was poured out into a Petri dish with a diameter of 12 cm. After evaporation of the solvent into the atmosphere at room temperature, an orange film was obtained. This film was kept under vacuum at 160°C for 65 hours. The colour of the film changed to bluish black. The transparency of the film was less than 10%.

Part of the film was doped by placing it a solution of 0.12 g of nitrosonium tetrafluoroborate in 10 ml of acetonitrile. This caused the colour of the film to change into light yellow. The transparency of the film was higher than 80%. After one month's storage under atmospheric conditions this value had not decreased.

## Example IV

A solution of 155 mg of dithiophthalide and 15 mg of Hypermer® LP4 (an amine derivative of a polycondensed fatty acid derivative) in 15 ml of mesitylene was kept at its boiling point for 18 hours while being stirred. A black suspension of poly(isothianaphthene) was formed. After cooling to room temperature the product was doped by addition to the suspension of a solution of 10 mg of nitrosonium tetrafluoroborate in 1 ml of acetonitrile. This caused the colour of the suspension to change into light grey.

## Comparative Experiment A

A mixture of 2.8 g of phthalide (Aldrich), 5.65 g of diphosphorus pentasulphide (Aldrich) and 25 ml of xylene was heated for 22 hours at a temperature of 145°C. The precipitate formed was filtered off and subsequently washed with, successively, a 10% aqueous KOH solution, with water, and with boiling tetrahydrofuran to remove the unreacted diphosporous pentasulphide and its residual products. After drying, 2.5 g of polyisothianaphthene was obtained, which corresponds to an efficiency of 90%.

The product obtained had a specific conductvity of 1 $S.cm^{-1}$. The Raman spectrum showed lines at 466 and 1192 $cm^{-1}$, which are characteristic for doped polyisothionaphthene.

## Claims

1. Method for the preparation of a heterocyclic polymer from monomer units having a structure according to the formula of Fig. Ia or Ib, where $R_1$ and $R_2$ are the same or different and are selected from the group formed by hydrogen, alkyl groups with 1-20 carbon atoms, aryl groups with 6-20 carbon atoms, alkaryl groups with 7-40 carbon atoms, aralkyl groups with 7-40 carbon atoms, alkoxy groups with 1-18 carbon atoms, $-O(CH_2CH_2O)_nCH_3$ with n = 4 and halogens; or where $R_1$ and $R_2$ both form part of a closed ring structure, characterized in that X = S and Y = S.

2. Method according to claim 1, characterized in that the monomer units are selected from the group formed by maleic trithioanhydride, citraconic trithioanhydride, succinic trithioanhydride, dithio-γ-butyrolactone and glutaric trithioanhydride.

3. Method according to claim 1, in which the monomer units at least partly contain a closed ring structure.

4. Method according to claim 3, characterized in that the monomer units are dithiophthalide or trithiophthalic anhydride.

5. Method according to claim 3, characterized in that the closed ring structure contains atoms other than carbon atoms.

6. Method according to claim 5, characterized in that the monomer units hav been selected from the group formed by 5-azophthalic trithioanhydride, 3,4-pyridine-dicarboxylic trithioanhydride, 2,3-pyrazine dicarboxylic trithioanhydride, 4-azophthalic trithioanhydride, 4-azodithiophthalide, 5-azodithiophthalide, 6-azodithiophthalide, 7-azodithiophthalide, 4,7-diazodithiophthalide, 4,6-diazodithiophthalide, 5,7-diazodithiophthalide, 2,3-thiophene dicarboxylic dithioanhydride, 3,4-thiophene dicarboxylic dithioanhydride and 4,5-pyrimidine dicarboxylic dithioanhydride.

7. Method for the preparation of a heterocyclic polymer from monomer units having a structure according to the formula of Fig. 3a or 3b, where $R_1$ to $R_6$ inclusive are the same or different and are selected from the group formed by hydrogen, alkyl groups with 1-20 carbon atoms, aryl groups with 6-20 carbon atoms, alkaryl groups with 7-40 carbon atoms, aralkyl groups with 7-40 carbon atoms, alkoxy groups with 1-18 carbon atoms, $- O(CH_2CH_2O)_nCH_3$ with n = 1-4 and halogens; or where at least an adjacent couple from the series $R_1$ to $R_6$ inclusive forms part of a closed ring structure, characterized in that X = S and Y = S.

8. Method according to claim 7, characterized in that the monomer units have been selected from the group formed by naphthalene-1,8-dicarboxylic trithioanhydride and the cyclic dithioester of naphthalene,1-methylene thio,8-dithiocarboxylic acid.

9. Method according to any one of claims 1-8, characterized in that the polymerization reaction takes place at a temperature between 20 and 200°C.

10. Method according to any one of claims 1-9, characterized in that the polymerization reaction takes place during 0.5-48 hours.

11. Method according to any one of claims 1-10, characterized in that the reaction pressure is between 0.01 and 100 bar.

12. Polymer composition containing the heterocyclic polymer obtained by the method according to any one of claims 1-11 and another polymer.

fig. 1a

fig. 1b

fig. 2a

fig. 2b

fig. 2c

fig. 2d

fig. 2e

fig. 2f

fig. 2g

fig. 2h

fig. 2i

fig. 2j

fig. 2k

fig. 2l

fig. 2m

fig. 2n

fig. 2o

fig. 2p

fig. 2q

fig. 3a

fig. 3b

European Patent
Office

**EUROPEAN SEARCH REPORT**

Application Number

EP 95 20 2736

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 399 463 (SHOWA DENKO KK) 28 November 1990 ----- | | C08G61/12 |
| | | | |
| | | | TECHNICAL FIELDS SEARCHED (Int.Cl.6) |
| | | | C08G C07D |

The present search report has been drawn up for all claims

| Place of search | Date of completion of the search | Examiner |
|---|---|---|
| THE HAGUE | 10 November 1995 | Stienon, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)